## Europäisches Patentamt

**European Patent Office**

**Office européen des brevets**

(19)

(11) Publication number: **0 086 113**
**B1**

(12) **EUROPEAN PATENT SPECIFICATION**

(45) Date of publication of patent specification: **01.10.86**

(51) Int. Cl.⁴: **B 29 C 47/02**

(21) Application number: **83300656.2**

(22) Date of filing: **10.02.83**

(54) Reinforced plastics strips.

(30) Priority: **10.02.82 GB 8203821**

(43) Date of publication of application:
**17.08.83 Bulletin 83/33**

(45) Publication of the grant of the patent:
**01.10.86 Bulletin 86/40**

(84) Designated Contracting States:
**BE DE FR GB IT LU NL**

(56) References cited:
**CH-A- 462 446**
**DE-B-2 439 649**
**GB-A-1 604 436**
**US-A-2 091 125**

(73) Proprietor: **Copely Developments Limited**
**Thurmaston Lane**
**Leicester LE4 7HR (GB)**

(72) Inventor: **Copely, James Dorien**
**Forestend 60 Main Street**
**Swithland, Nr. Leicester (GB)**
Inventor: **Copely, Brian John**
**c/o Copely Developments Limited**
**Thurmaston Lane**
**Leicester LE4 7HR (GB)**

(74) Representative: **Coxon, Philip et al**
**Eric Potter & Clarkson 14 Oxford Street**
**Nottingham NG1 5BP (GB)**

Courier Press, Leamington Spa, England.

## Description

This invention is concerned with forming reinforced plastics strips, and is especially concerned with reinforced plastics strips for use as curtains.

In the specification of British Patent 1604436 there is described a method of forming a strip having rounded edges of plastics material, comprising extruding the material as a tube through a circular die, and before the material solidifies, pressing the tube flat so as to form a strip. A plurality of such strips when suspended vertically can form a curtain.

Curtains of this kind may be used in, for example, industrial premises to seal off doorways or openings. The use of such curtains helps to reduce the transmission of noise and heat from one side of the doorway to the other.

The strips for forming curtains described in the above specification are of a plastics material and it has been found in practice that when suspended from a horizontal support rail the strips tend to elongate, so that if they are initially cut to the correct length for the height of a doorway opening they tend after a period of time to come into contact with the floor surface. This effect is particularly disadvantageous, especially when the doorway is used for the passage of trucks and other vehicles.

It is an object of the present invention to provide plastic strips of the kind described in the aforesaid patent specification, but which do not suffer from the disadvantage of elongation.

According to the present invention there is provided a method of forming a strip of plastics material for use in a vertically extending curtain comprising extruding the plastics material through a die to form a tube and passing the tube through pressing means, before the plastics material has set, to form a flat strip characterized by the steps of drawing an inextensible fibre through the die within the tube, simultaneously with the extrusion of the plastics material, and passing the tube together with the or each inextensible fibre through the pressing means to form a flat strip incorporating the or each inextensible fibre.

The or each inextensible fibre may be of a textile nature, such as, a twisted polypropylene, polyester, polyamide or other fibre, or may be a natural fibre such as cotton flax etc.

It is desirable that the or each inextensible fibre be compatible with the plastics material forming the tube so that as the tube is passed through the pressing means to form a flat strip, the material of the or each fibre is incorporated into the inner walls of the synthetic plastics material of the tube and is firmly embedded therein. It is preferable that the pressing means comprises nip rollers.

By the use of the or each inextensible fibre, the strips when suspended vertically will not elongate and hence the disadvantage of the strips described and referred to in the specification of British Patent 1604436 is overcome.

Reference is now made to the accompanying drawings in which:

Figure 1 shows a schematic diagram of apparatus for use in a method of forming a reinforced plastics strip in accordance with the invention; and

Figure 2 is a section on the lines 2—2 of Figure 1.

In the drawings a plastics extruder generally designated 1 is provided with an extrusion head 2, through which a plastics material 3 is extruded.

A cone-shaped floor stand 4 is attached to the plastics extruder 1 by means of a bar 5. The stand 4 supports five reels 6, each of which can provide a supply of polyester fibre 7.

An air supply may be connected to one leg 9a of a two-legged spider 2a. The fibres 7 are delivered to a second leg 9b of the spider 2a.

A tension screw 8 is provided to allow adjustment of the tension of the fibres 7.

The plastics extruder 1 is mounted upon a hollow central shaft which extends axially of the extruder. A fibre guiding tube guides the fibres from the second leg of the spider into the central shaft. The fibre guiding tube curves as it enters the central shaft and then extends along the central shaft through the extrusion head 2. The fibre guiding tube should preferably be manufactured from a hardened steel.

Air may pass through the extrusion head 2 along the central shaft and surrounding the fibre guiding tube. The air is supplied to the central shaft through an air control pipe connected to the first leg 9a of the spider.

A spacer bar 10 is located in front of the extrusion head 2, but behind a nip roller unit 11 which contains nip rollers 12.

In use, the plastics material 3 is extruded in the form of an air blown tubular bubble, the supply of air being provided from the air supply through the air control pipe and the central shaft.

The fibres 7 are drawn from their respective reels into the extruder 1 and are guided through the fibre guide tube until they are inside the tubular bubble. The spacer bar 10 serves the purpose of separating the fibres so that they are evenly distributed, and are substantially parallel to each other within the tubular bubble.

The tubular bubble together with the fibres then pass to the nip roller unit 11, where the tubular bubble is flattened by the nip rollers 12.

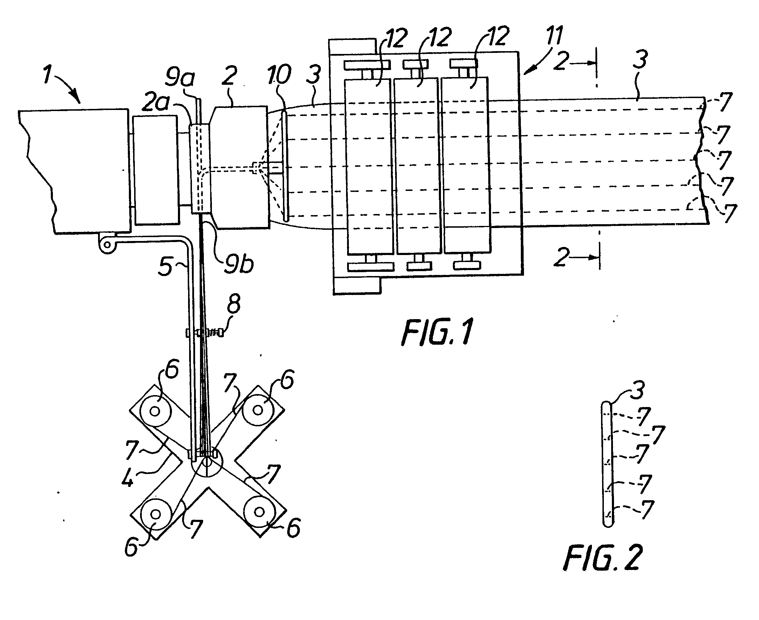

The plastics material 3 leaves the nip roller unit 11 as a flat strip having rounded edges, and incorporating the fibres 7 (as illustrated in Figure 2).

## Claims

1. A method of forming a strip of plastics material (3) for use in a vertically extending curtain comprising extruding the plastics material (3) through a die (2) to form a tube and passing the tube through pressing means, before the plastics material has set, to form a flat strip characterised by the steps of drawing at least one inextensible fibre (7) through the die (2), within the tube, simultaneously with the extrusion of the plastics material (3), and passing the tube together with the or each inextensible fibre through the pressing means (11) to form a flat strip incorporating the or each inextensible fibre (7).

2. A method according to Claim 1 in which the or each inextensible fibre (7) is formed from a polypropylene, polyester or polyamide fibre.

3. A method according to Claim 1 in which the or each inextensible fibre is formed from cotton flax.

4. A method according to any preceding claim in which a plurality of said inextensible fibres (7) are passed through a spacer bar (10), before being passed through the pressing means (11), in order to evenly arrange the fibres (7) within the tube in parallel-spaced relationship with each other.

5. A method according to any preceding claim in which the pressing means (11) comprises nip rollers (12).

**Patentansprüche**

1. Verfahren zu Bildung eines Kunststoffbandes für die Verwendung in sich senkrecht erstreckenden Vorhängen, bei welchem das Kunststoffmaterial (3) durch eine Düse (2) zu einem Schlauch extrodiert wird, welcher durch eine Preßeinrichtung geführt wird bevor sich das Kunststoffmaterial verfestigt, um ein flaches Band zu bilden, dadurch gekennzeichnet, daß gleichzeitig mit dem Extrodieren des Kunststoffmaterials (3) mindestens ein nicht dehnbarer Faden (7) durch die Düse (2) innerhalb des Schlauches gezogen wird, und der Schlauch zusammen mit dem oder den nicht dehnbaren Fäden durch die Preßeinrichtung (11) hindurchläuft und ein flaches den oder die nicht dehnbaren Fäden (7) enthaltendes Band bildet.

2. Verfahren nach Anspruch 1, dadurch gekennzeichnet, daß der oder die nicht dehnbaren Fäden (7) aus einer Polipropylen-, Polyester- oder Polyamidfaser gebildet ist.

3. Verfahren nach Anspruch 1, dadurch gekennzeichnet, daß der oder die nicht dehnbaren Fäden (7) aus Baumwolle gebildet sind.

4. Verfahren nach einem der vorangehenden Ansprüche, dadurch gekennzeichnet, daß eine Vielzahl nicht dehnbarer Fäden (7) über eine Abstandsschiene (10) geführt sind bevor sie durch die Preßeinrichtung (11) laufen, um die Fäden (7) innerhalb des Schlauches parallel zueinander auszurichten.

5. Verfahren nach einem der vorangehenden Ansprüchen, dadurch gekennzeichnet, daß die Preßeinrichtung (11) Walzen (12) aufweist.

**Revendications**

1. Procédé de fabrication d'une bande en matière plastique (3), destiné à être utilisée dans un rideau s'étendant verticalement, comportant l'extrusion de la matière plastique (3) à travers une filière (2) pour former un tube et le passage du tube à travers des moyens de compression avant que la matière plastique ait durci, pour former une bande plane, caractérisé par les phases de traction d'au moins une fibre inextensible (7) à travers la filière (2), à l'intérieur du tube, en même temps que l'extrusion de la matière plastique (3), et de passage du tube avec la ou chaque fibre inextensible à travers les moyens de compression (11) pour former une bande plane dans laquelle est incorporée la ou chaque fibre inextensible (7).

2. Procédé selon la revendication 1, dans lequel la ou chaque fibre inextensible (7) est formée à partir d'une fibre de polypropylène de polyester ou de polyamide.

3. Procédé selon la revendication 1, dans lequel la ou chaque fibre inextensible est formée à partir de fibre de lin.

4. Procédé selon l'une quelconque des revendications précédentes, dans lequel on fait passer plusieurs desdites fibres inextensibles (7) à travers une barre d'espacement (10), avant leur passage à travers les moyens de compression (11) pour arranger régulièrement les fibres (7) à l'intérieur du tube dans une disposition dans laquelle elles sont espacées parallèlement les unes par rapport aux autres.

5. Procédé selon l'une quelconque des revendications précédentes, dans lequel les moyens de compression (11) comportent des cylindres de compression (12).

FIG.1

FIG.2

0 086 113